# EUROPÄISCHE PATENTSCHRIFT

(11) **EP 3 289 936 B1**
(45) Veröffentlichungstag und Bekanntmachung des Hinweises auf die Patenterteilung: **26.02.2020**
(21) Anmeldenummer: 17186820.1
(22) Anmeldetag: 18.08.2017
(51) Int. Cl.: A47J 31/46

(54) **HEISSGETRÄNKEZUBEREITUNGSEINRICHTUNG**
HOT BEVERAGE PREPARATION DEVICE
DISPOSITIF DE PRÉPARATION DE BOISSONS CHAUDES

(30) Priorität: 02.09.2016 DE 102016216683
(43) Veröffentlichungstag der Anmeldung: 07.03.2018
(73) Patentinhaber: BSH Hausgeräte GmbH, 81739 München (DE)
(72) Erfinder: Einsiedler, Thomas, 83278 Traunstein (DE); Sollmann, Martin, 83339 Chieming (DE); Höglauer, Michael, 83246 Unterwössen (DE)

(56) Entgegenhaltungen:
- EP-A1- 2 062 512
- EP-A1- 2 098 146
- EP-A1- 2 807 961

## Beschreibung

Die Erfindung betrifft eine Heißgetränkezubereitungseinrichtung mit einer Ventilanordnung die mindestens ein betätigbares Ventil aufweist, einer Brüheinheit mit einer zwischen Funktionsstellungen beweglichen Brühkammer und einer Kopplungseinrichtung die eine Bewegung der beweglichen Brühkammer und/oder eines beweglichen Teils der Brüheinheit mit einer Betätigung mindestens eines betätigbaren Ventils der Ventilanordnung koppelt.

Es ist bekannt, Heißgetränkezubereitungseinrichtung mit Brüheinheiten und Ventilanordnungen auszustatten. Brüheinheiten weisen dabei Brühkammern auf, die Heißgetränkezutaten wie beispielsweise Kaffeepulver aufnehmen und relativ zu einem Brühkolben der Brüheinheit bewegt werden. Die Brüheinheiten sind dabei zwischen einer Befüllposition und einer Brühposition bewegbar. Die Heißgetränkezutaten können vorportioniert eingegeben, oder in der Heißgetränkezubereitungseinrichtung aus Grundzutaten aufbereitet werden, wie beispielsweise Kaffeepulver, das durch eine Mahleinrichtung aus ganzen Kaffeebohnen aufbereitet wird.

So ist aus der EP 2 062 512 A1 eine als Kaffee-Zubereitungsmaschine ausgebildete Heißgetränkezubereitungseinrichtung bekannt, die eine Brüheinheit mit einer Brühkammer und eine Ventileinrichtung aufweist. An der Brühkammer ist eine Einrichtung zur Betätigung von beweglichen Ventilen in der Ventileinrichtung angeordnet. Die Bewegung der Ventile korrespondiert mit verschiedenen Funktionsstellungen der beweglichen Brühkammer. Darüber hinaus sind auch Kaffeemaschinen mit einem motorisch verstellbaren Mehrwegeventil bekannt, beispielsweise aus EP 2 807 961 A1 und EP 2 098 146 A1.

Durch die zahlreichen verschiedenen zur Heißgetränkebereitung benötigten Komponenten in einer Heißgetränkezubereitungseinrichtung und deren teils komplexer Funktionalität entsteht ein hoher großer Aufwand zur Erfassung von Betriebszuständen der Komponenten. Ohne Überwachung der Betriebszustände kann meist kein korrektes Arbeiten oder Zusammenarbeiten der Komponenten erreicht werden, wiederum eine Qualität der zubereiteten Getränke negativ beeinflussen kann. Der hohe Aufwand zur Erfassung von Betriebszuständen wirkt sich einerseits nachteilig auf die Herstellungskosten sowie den Fertigungsaufwand aus. Andererseits können ohne die Erfassung der Betriebszustände die Nutzererwartungen an die Getränkequalität nicht erfüllt werden. Zusätzlich steigt durch einen hohen Aufwand zu Erfassung mehrerer teils komplexer Komponenten eine Fehlerhäufigkeit oder Fehleranfälligkeit.

Aufgabe der vorliegenden Erfindung ist es, eine Heißgetränkezubereitungseinrichtung anzugeben, die eine einfache und kostengünstige Erfassung der Betriebszustände von mehreren Komponenten ermöglicht.

Diese Aufgabe wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem grundlegenden Gedanken, eine Heißgetränkezubereitungseinrichtung so auszubilden, dass die Betriebszustände mehrerer Komponenten mit nur einer einfachen Erfassungseinrichtung erfasst werden. Insbesondere bei Komponenten mit komplexer Funktionalität wie einer Ventilanordnung mit betätigbaren Ventilen und Brüheinheiten mit beweglichen Brühkammern ist dies vorteilhaft.

Die erfindungsgemäße Heißgetränkezubereitungseinrichtung beinhaltet eine Ventilanordnung die mindestens drei betätigbare Ventile aufweist, eine Brüheinheit mit einer zwischen Funktionsstellungen beweglichen Brühkammer und eine Kopplungseinrichtung die eine Bewegung der beweglichen Brühkammer und/oder eines beweglichen Teils der Brüheinheit mit einer Betätigung der mindestens drei betätigbaren Ventile der Ventilanordnung koppelt.

Erfindungsgemäß beinhaltet die Heißgetränkezubereitungseinrichtung dazu eine Erfassungseinrichtung die eine Bewegung der beweglichen Brühkammer und/oder des beweglichen Teils der Brüheinheit und eine Betätigung mindestens eines betätigbaren Ventils erfasst. Bei der erfindungsgemäßen Heißgetränkezubereitungseinrichtung können so auf vorteilhafte Weise die Betriebszustände der Brüheinheit mit der beweglichen Brühkammer und der Ventilanordnung mit mindestens einem betätigbaren Ventil mit nur einer Erfassungseinrichtung erfasst werden. Die erfindungsgemäße Heißgetränkezubereitungseinrichtung ermöglicht so eine einfache und kostengünstige Erfassung der Betriebszustände mehrerer Komponenten. Die Erfassungseinrichtung kann durch die erfindungsgemäße Anordnung einfach und kostengünstig aufgebaut sein und mehrere Erfassungseinrichtungen einer herkömmlichen Anordnung ersetzen. Die einfache und kostengünstige Erfassung der Betriebszustände kann es ermöglichen, die Nutzererwartungen an die Getränkequalität durch eine kostengünstig aufgebaute Heißgetränkezubereitungseinrichtung zu erfüllen. Einer dieser Betriebszustände kann dabei beispielsweise ein Verfahrweg der Brüheinheit sein, welcher der Heißgetränkezubereitungseinrichtung Rückschlüsse auf das eingefüllte Volumen an Heißgetränkezutaten wie beispielsweise Kaffeepulver ermöglicht. Auch das Volumen oder die Menge an eingefüllten Heißgetränkezutaten wie beispielsweise Kaffeepulver direkt kann einen dieser Betriebszustände repräsentieren. Einer weiterer dieser Betriebszustände kann beispielsweise ein Betätigungszustand der Ventileinrichtung und/oder mindestens eines Ventils sein. Die mit der Erfassungseinrichtung erfassten Betriebszustände können einer Steuerungseinrichtung der Heißgetränkezubereitungseinrichtung zur Weiterverarbeitung bereitgestellt werden. Die Ventileinrichtung und/oder mindestens ein Ventil können dazu bestimmt sein, ein Fluid, beispielsweise Wasser und/oder Dampf für unterschiedliche Getränke und/oder Getränkebestandteile an unterschiedlichen Fluidpfaden stromab der Ventileinrichtung bereitzustellen. Erfindungsgemäß erfasst die Erfassungseinrichtung je eine Betätigung der mindestens drei betätigbaren Ventile.

In einer vorteilhaften Weiterbildung der erfindungsgemäßen Lösung wird die Erfassungseinrichtung durch eine Bewegung eines Teils der Kopplungseinrichtung betätigt. Die Kopplungseinrichtung koppelt dabei eine Bewegung der beweglichen Brühkammer und/oder eines beweglichen Teils der Brüheinheit mit einer Betätigung mindestens eines betätigbaren Ventils der Ventilanordnung. Eine Betätigung der Erfassungseinrichtung durch eine Bewegung eines Teils der Kopplungseinrichtung ermöglicht daher eine besonders direkte Betätigung ohne unnötige Störeinflüsse. Daher kann beispielsweise eine Präzisionsanforderung an die Erfassungseinrichtung verringert werden. So kann ein Einsatz von weniger präzisen und daher einfacheren und kostengünstigen Erfassungsvorrichtungen auf vorteilhafte Weise einen einfachen und kostengünstigen Aufbau der Heißgetränkezubereitungseinrichtung ermöglichen.

In einer weiteren vorteilhaften Weiterbildung der erfindungsgemäßen Lösung wird die Erfassungseinrichtung zusätzlich oder alternativ durch eine Bewegung eines Betätigungsmittels zur Betätigung mindestens eines betätigbaren Ventils in der Kopplungseinrichtung betätigt. Das Betätigungsmittel zur Betätigung mindestens eines betätigbaren Ventils ist dabei sehr präzise ausgeführt, was für eine präzise Betätigung eines Ventils unerlässlich ist. Diese Präzision kann weiter dazu genutzt werden, eine erforderliche Genauigkeit der Erfassung durch eine Erfassungseinrichtung mit noch geringerer Präzisionsanforderung zu erreichen. Dadurch können der Aufbau der Heißgetränkezubereitungseinrichtung in vorteilhafter Weise weiter vereinfacht und Herstellungskosten weiter reduziert werden.

In einer weiteren vorteilhaften Weiterbildung der erfindungsgemäßen Lösung erfasst die Erfassungseinrichtung zusätzlich oder alternativ ob eine Betätigung, sowie ein zeitliches Andauern der Betätigung und/oder Nichtbetätigung. Die Information über ein zeitliches Andauern der Betätigung und/oder Nichtbetätigung ermöglicht es, mehrere zusätzliche Informationen über die genannten Komponenten oder weitere Komponenten der Heißgetränkezubereitungseinrichtung zu erfassen. So kann beispielsweise bei festgelegter Geometrie des Betätigungsmittels zur Betätigung mindestens eines betätigbaren Ventils durch das erfasste Andauern der Betätigung und/oder Nichtbetätigung eine Bewegungsgeschwindigkeit des Betätigungsmittels erfasst werden. Dies kann einerseits in der Erfassungseinrichtung erfasst werden, oder aber in der Steuerungseinrichtung der Heißgetränkezubereitungseinrichtung. Dadurch können in vorteilhaft einfacher und kostengünstiger Weise weitere Betriebszustände von weiteren Komponenten der Getränkezubereitungseinrichtung erfasst werden.

In einer weiteren vorteilhaften Weiterbildung der erfindungsgemäßen Lösung weist das Betätigungsmittels zur Betätigung mindestens eines betätigbaren Ventils zusätzlich oder alternativ eine Außenverzahnung, eine Drehachse und Schaltnocken zum Betätigen der Erfassungsvorrichtung auf. Durch die Außenverzahnung, die Drehachse und Schaltnocken zum betätigen der Erfassungsvorrichtung wird eine geometrisch besonders vorteilhafte Erfassung ermöglicht. Die Außenverzahnung ermöglicht eine besonders direkte und präzise Koppelung. Die Anordnung der Schaltnocken am Betätigungsmittel ermöglicht bei Drehung des Betätigungsmittels je ganzer Umdrehung identische Betriebszustände der Ventileinrichtung zu erreichen und mit der Erfassungseinrichtung zu erfassen. So kann in vorteilhafter Weise eine Bewegung der beweglichen Brühkammer und/oder eines beweglichen Teils der Brüheinheit und der dabei vorliegende Betriebszustände der Ventileinrichtung über mehrere Umdrehungen des Betätigungsmittels erreicht werden. Dadurch vereinfacht sich der Aufbau der Getränkezubereitungseinrichtung weiter in vorteilhafter Weise.

In einer weiteren vorteilhaften Weiterbildung der erfindungsgemäßen Lösung ist die Außenverzahnung des Betätigungsmittels zusätzlich oder alternativ mit einer Außenverzahnung eines Kupplungs-/Antriebsmittels zum Antrieb der beweglichen Brühkammer und/oder des beweglichen Teils der Brüheinheit wirkverbunden. Dies ermöglicht eine besonders direkte und präzise Koppelung der Brüheinheit und/oder der der beweglichen Brühkammer und/oder eines beweglichen Teils der Brüheinheit mit der Betätigung mindestens eines betätigbaren Ventils der Ventilanordnung. Dies ermöglicht eine besonders kostengünstige und gleichzeitig präzise Erfassung der Betriebszustände der gekoppelten Komponenten. Dies ermöglicht einen gleichermaßen soliden und gleichermaßen einfachen und kostengünstigen Aufbau der Getränkezubereitungseinrichtung.

In einer weiteren vorteilhaften Weiterbildung der erfindungsgemäßen Lösung wird die Erfassungseinrichtung zusätzlich oder alternativ durch die Schaltnocken des Betätigungsmittels zur Betätigung mindestens eines betätigbaren Ventils betätigt. Die Schaltnocken des Betätigungsmittels können dabei vom Betätigungsmittel aus gesehen in Richtung der Ventileinrichtung erhaben sein. Auf der der Ventileinrichtung abgewandten Seite des Betätigungsmittels kann eine Negativform des Nockens wie beispielsweise eine Senke oder ein Tal entstehen, welche die Erfassungsvorrichtung erfasst. Dies ermöglicht einen weiter vereinfachten und daher sehr kostengünstigen Aufbau der Getränkezubereitungseinrichtung.

In einer weiteren vorteilhaften Weiterbildung der erfindungsgemäßen Lösung sind die Erfassungseinrichtung, das Betätigungsmittels zur Betätigung mindestens eines betätigbaren Ventils und das Kupplungs-/Antriebsmittels in und/oder an einem Getriebegehäuse angeordnet. Dadurch können die Bestandteile der Erfassungseinrichtung auf einfache und kostengünstige Weise vor Verschmutzungen oder sonstigen schädlichen Einflüssen bewahrt werden. Dies ermöglicht es, eine robuste und langlebige Erfassungseinrichtung auf einfache und kostengünstige Weise bereitzustellen. Dadurch kann die Heißgetränkezubereitungseinrichtung einfach und kostengünstig ausgeführt werden und negative Einflüsse auf die Qualität der zubereiteten Getränke in vorteilhafter Weise langfristig verhindern.

In einer weiteren vorteilhaften Weiterbildung der erfindungsgemäßen Lösung weist das Betätigungsmittels zur Betätigung mindestens eines betätigbaren Ventils zusätzlich oder alternativ eine mindestens der Anzahl an betätigbaren Ventilen entsprechende Anzahl an Schaltnocken aufweist. Dadurch kann die Erfassungseinrichtung mit einem einzigen Erfassungsmittel die Bewegungszustände und damit die Schaltzustände aller Ventile erfassen. Dies ermöglicht es, eine in vorteilhafter Weise einfach aufgebaute Erfassungseinrichtung zur Erfassung der Zustände mehrere Komponenten und damit eine besonders vorteilhaft aufgebaute Heißgetränkezubereitungseinrichtung anzugeben.

In einer weiteren vorteilhaften Weiterbildung der erfindungsgemäßen Lösung weist mindestens ein Schaltnocken zusätzlich oder alternativ eine von den anderen Schaltnocken abweichende Geometrie auf, so dass die Erfassungseinrichtung ein von dem der anderen Nocken abweichendes zeitliches Andauern der Betätigung und/oder Nichtbetätigung erfasst. Dadurch kann mit der Erfassungseinrichtung zusätzlich erfasst werden, welcher Nocken die Ventileinrichtung betätigt. Damit kann bei definierter Geometrie des Betätigungsmittels und der Ventileinrichtung erfasst werden, welches Ventil sich in welchem Zustand befindet. Zusätzlich kann damit bei einem sich um die Drehachse drehenden Betätigungsmittel die Anzahl der Umdrehungen erfasst werden. Damit kann insbesondere eine mehrere Umdrehungen des Betätigungsmittels erfordernde Bewegung der Brühkammer der Brüheinheit auf einfache Weise präzise erfasst werden.

Erfindungsgemäß erfasst die Erfassungseinrichtung die Bewegung der beweglichen Brühkammer und/oder des beweglichen Teils der Brüheinheit und zusätzlich je eine Betätigung der mindestens drei betätigbaren Ventile. Insbesondere bei als Kaffeeautomat ausgebildeten Heißgetränkezubereitungseinrichtungen ist es für die bereitzustellende Getränkevielfalt besonders vorteilhaft, eine Ventileinrichtung mit mindestens drei betätigbaren Ventilen anzuordnen. Die Erfassung aller Betriebszustände mit herkömmlichen Erfassungsmitteln ist daher besonders hoch. Daher ermöglicht die erfindungsgemäße Erfassung von je einer Betätigung der mindestens drei betätigbaren Ventile einen besonders vorteilhaften einfachen und kostengünstigen Aufbau der Heißgetränkezubereitungseinrichtung, insbesondre eines Kaffeeautomaten.

In einer weiteren vorteilhaften Weiterbildung der erfindungsgemäßen Lösung weist die Erfassungsvorrichtung zusätzlich oder alternativ einen Mikroschalter auf. Durch vorteilhafte Kopplungseinrichtung kann die mit einem Mikroschalter erreichbare Präzision ausreichend für eine präzise Erfassung der Betriebszustände sein. Der Einsatz eines Mikroschalters als Erfassungsmittel der Erfassungseinrichtung ermöglicht einen gleichermaßen soliden wie auch einfachen und kostengünstigen Aufbau der Heißgetränkezubereitungseinrichtung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Insbesondere sind die genannten Merkmale in diesem Rahmen jeweils nicht auf die genannte Anzahl beschränkt, so dass in Einzahl genannte Merkmale durchaus mehrfach vorhanden und mehrfach vorkommende Merkmale auch in Einzahl vorhanden sein können.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Bauteile beziehen.

Dabei zeigen jeweils schematisch:
- Fig. 1:: eine schematisch dargestellte Seitenansticht einer erfindungsgemäßen Heißgetränkezubereitungseinrichtung mit in Funktionsstellung A befindlicher Brüheinheit,
- Fig. 2:: eine Darstellung wie Fig. 1 mit in Funktionsstellung B befindlicher Brüheinheit,
- Fig. 3:: eine Detaildarstellung der Kopplungseinrichtung der Heißgetränkezubereitungseinrichtung aus Fig. 1 in perspektivischer Ansicht von schräg oben, und
- Fig. 4:: eine Detaildarstellung der Kopplungseinrichtung der Heißgetränkezubereitungseinrichtung aus Fig. 1 in perspektivischer Ansicht von schräg unten.

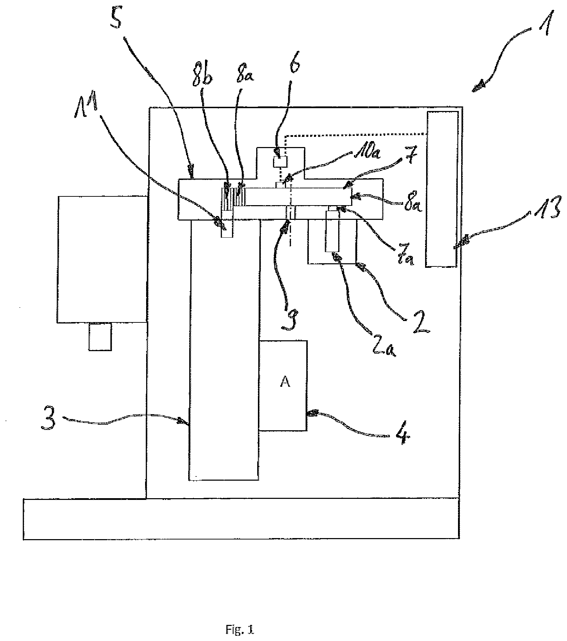

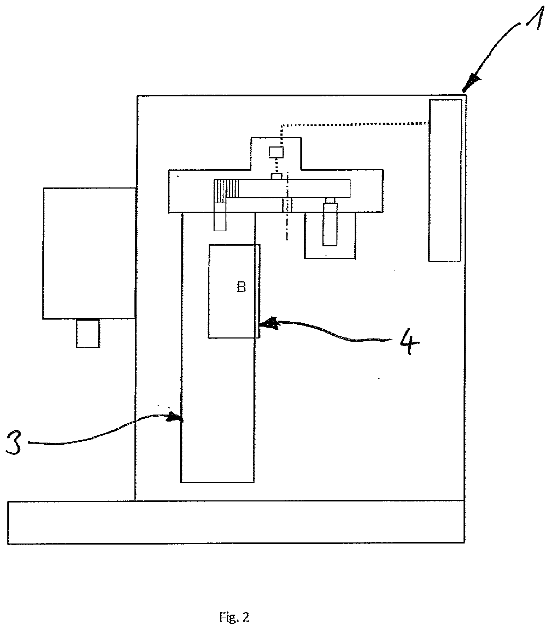

Eine Ausgestaltung der erfindungsgemäßen Heißgetränkezubereitungseinrichtung 1 als Kaffeeautomat weist entsprechend der Fig.1 eine Ventilanordnung 2 mit drei betätigbaren Ventilen 2a; 2b; 2c auf. Weiter Weist die Heißgetränkezubereitungseinrichtung 1 eine Brüheinheit 3 mit einer zwischen den beiden Funktionsstellungen A und B bewegbaren Brühkammer 4 auf. In der Funktionsstellung B (siehe Fig. 2) kann die Brühkammer 4 mit Kaffeepulver aus einem nicht dargestellten Mahlwerk befüllt werden. Zum Aufbrühen eines auszugebenden Getränks ist die Brühkammer 4 in die Funktionsstellung B bewegbar, an. Weitere für ein Aufbrühen benötigte Komponenten wie ein Wassertank, eine Heizeinrichtung, eine Zuleitung des erhitzen Wassers zur Brühkammer 4 und eine Ausgabeleitung für das fertige Heißgetränk sind hier nicht dargestellt. Oberhalb der Brüheinheit 4 ist eine Kopplungseinrichtung 5 angeordnet, die die Bewegung der beweglichen Brühkammer 4 mit einer Betätigung der Ventile 2a; 2b; 2c der Ventilanordnung 2 koppelt. Die Bewegung einer Steuerscheibe als Betätigungsmittel 7; 7a zur Betätigung der drei Ventile 2a; 2b; 2c in der Kopplungseinrichtung 5 wird durch die Erfassungseinrichtung 6 erfasst. Die Ventile 2b und 2c sind in Fig. 1 nicht dargestellt. Durch die Nocke zur Ventilbetätigung 7a wird dabei ein nicht dargestellter Ventilstößel im Ventil in eine Öffnungsposition bewegt und dadurch ein Fluidfpad geöffnet.

In der Ausführung nach Fig. 1 ist der Nocken zur Ventilbetätigung 7a nicht identisch mit dem diesem Ventil zugeordneten Schaltnocken 10a aber diesem zugeordnet. So kann die Erfassungseinrichtung 6 der Heißgetränkezubereitungseinrichtung 1 durch die Betätigung oder Nichtbetätigung der jeweiligen Schaltnocke 10a, 10b, 10c (10b und 10c in Fig. 1 nicht dargestellt) die Betätigung oder Nichtbetätigung der jeweils zugeordneten Ventile 2a; 2b; 2c erfassen. Die Steuerscheibe als Betätigungsmittel 7 ist an ihrem Außenumfang mit einer Außenverzahnung 8a versehen, die in Fig. 1 und 2 nur abschnittsweise schematisch dargestellt ist. Sie greift in die Außenverzahnung 8b eines Kupplungs-/Antriebsmittels 11 ein. Das Kupplungs-/Antriebsmittel 11 greift formschlüssig in ein nicht dargestellte Antriebsnabe der Brüheinheit 3 ein, die mit einer Bewegung der Brühkammer 4 gekoppelt ist. Die Bewegung des Kupplungs-/Antriebsmittels 11 wird im vorliegenden Beispiel über eine nicht dargestellte Antriebsspindel in eine Bewegung der Brühkammer 4 umgewandelt. Damit ist durch das Kupplungs-/Antriebsmitte 11, die Steuerscheibe als Betätigungsmittel 7 und den Nocken zur Ventilbetätigung 7a in der Kopplungseinrichtung 5 eine Bewegung der beweglichen Brühkammer mit der Bewegung der Steuerscheibe als Betätigungsmittel 7 für die Ventile 2a; 2b; 2c der Ventileinrichtung 2 gekoppelt. Die Steuerscheibe als Betätigungsmittel 7 kann sich dabei um eine Drehachse 9 bewegen. Bei mehreren Umdrehungen der Steuerscheibe als Betätigungsmittel 7 widerholen sich durch die kreisförmige Gestaltung der Steuerscheibe die Betätigungen durch die Schaltnocken 10a; 10b; 10c. In einer mit der Erfassungseinrichtung 6 wirkverbundenen Steuerungseinrichtung 13 kann auch bei mehreren Umdrehungen der Steuerscheibe als Betätigungsmittel 7 die Bewegung der Brühkammer 4 zwischen den Funktionsstellungen A und B und die Betätigung der Ventile 2a; 2b; 2c erfasst werden. Dazu wird die Brühkammer 4 zu einer Initialisierung auf einen nicht dargestellten Endanschlag in der Funktionsstellung A gefahren. Von dort aus werden alle Betätigungen der Erfassungseinrichtung 6 aufaddiert. Damit kann über den gesamten Weg zwischen den Funktionsstellungen A und B die Bewegung der Brühkammer 4 und die Betätigung der Ventile 2a; 2b; 2c bei mehreren Umdrehungen der Steuerscheibe als Betätigungsmittel 7 zuverlässig, einfach und kostengünstig erfasst werden. Durch die genau erfasste Bewegungsposition der Brühkammer 4 kann so zusätzlich zur Betätigung der Ventileinrichtung 2 ein eingefülltes Volumen an Zubereitungsmittel wie Kaffeepulver auf vorteilhafte Weise erfasst werden.

Wie in Fig. 2 ersichtlich kann die Brühkammer 4 der Brüheinheit 3 in eine zweite Funktionsstellung B bewegt werden. In dieser Funktionsstellung B bildet die Brühkammer mit einem nicht dargestellten Brühkolben einen Druckdichten Aufbrühraum aus.

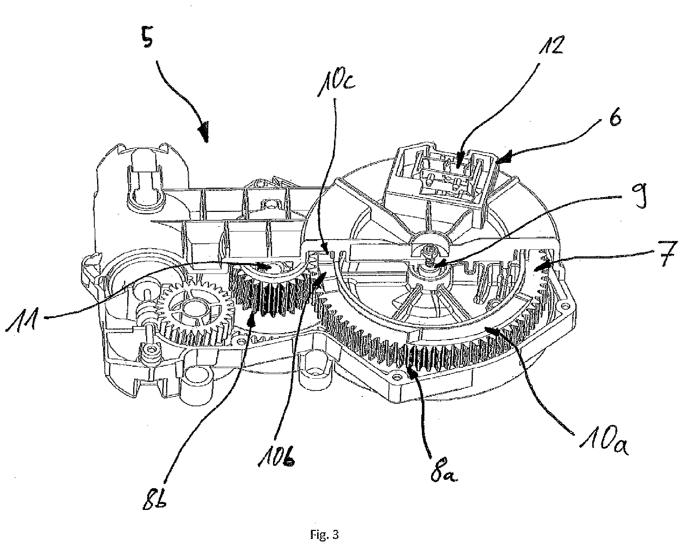

Wie in Fig. 3 ersichtlich ist die ist die Schaltnocke 10a der Steuerscheibe als Betätigungsmittel 7 länger ausgebildet als beispielsweise die Schaltnocke 10b. Damit wird beim Durchfahren der Schaltnocke 10a die Erfassungseinrichtung 6 länger betätigt. Dadurch wird bei nur einer Umdrehung der als Betätigungsmittel 7 erfasst, welches der Ventile 2a, 2b, 2c, betätigt ist. Als Erfassungsmittel der Erfassungseinrichtung 6 ist ein Mikroschalter 12 angebracht. Wie in Fig. 1 dargestellt ist dieser mit der Steuerungseinrichtung der Heißgetränkezubereitungseinrichtung wirkverbunden.

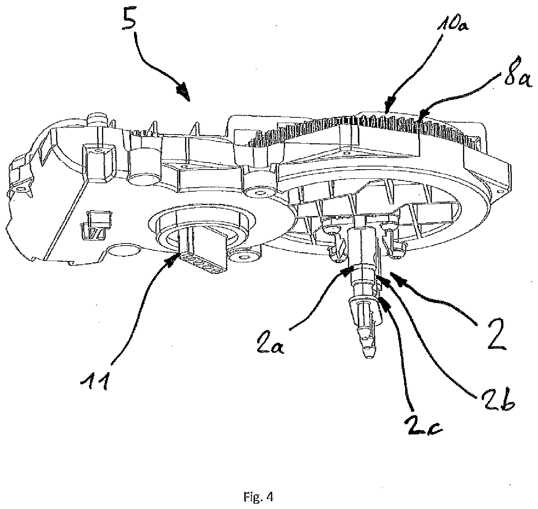

Wie in Fig. 4 ersichtlich sind an der Unterseite des Gehäuses der Kopplungseinrichtung 5 drei Ventile 2a; 2b; 2c der Ventileinrichtung 2 und das Kupplungs-/Antriebsmittel 11 angeordnet.

### BEZUGSZEICHENLISTE

- 1: Heißgetränkezubereitungseinrichtung
- 2: Ventilanordnung
- 2a: erstes betätigbares Ventil
- 2b: zweites betätigbares Ventil
- 2c: drittes betätigbares Ventil
- 3: Brüheinheit
- 4: bewegliche Brühkammer
- 5: Kopplungseinrichtung
- 6: Erfassungseinrichtung
- 7: Steuerscheibe des Betätigungsmittels
- 7a: Nocken zur Ventilbetätigung
- 8a: Außenverzahnung des Betätigungsmittels
- 8b: Außenverzahnung des Kupplungs-/Antriebsmittels
- 9: Drehachse
- 10a: erster Schaltnocken
- 10b: zweiter Schaltnocken
- 10c: dritter Schaltnocken
- 11: Kupplungs-/Antriebsmittels
- 12: Mikroschalter
- 13: Steuerungseinrichtung

## Patentansprüche

1. Heißgetränkezubereitungseinrichtung (1) mit einer Ventilanordnung (2) die mindestens drei betätigbare Ventile (2a; 2b; 2c) aufweist, einer Brüheinheit (3) mit einer zwischen Funktionsstellungen (A; B) beweglichen Brühkammer (4) und einer Kopplungseinrichtung (5) die eine Bewegung der beweglichen Brühkammer (4) und/oder eines beweglichen Teils der Brüheinheit (3) mit einer Betätigung der mindestens drei betätigbaren Ventile (2a; 2b; 2c) der Ventilanordnung (2) koppelt, **dadurch gekennzeichnet, dass** eine Erfassungseinrichtung (6) die Bewegung der beweglichen Brühkammer (4) und/oder des beweglichen Teils der Brüheinheit (3) und je eine Betätigung der mindestens drei betätigbaren Ventile (2a; 2b; 2c) erfasst.

2. Heißgetränkezubereitungseinrichtung (1) nach Anspruch 1, **dadurch gekennzeichnet, dass** die Erfassungseinrichtung (6) durch eine Bewegung eines Teils der Kopplungseinrichtung (5) betätigt wird.

3. Heißgetränkezubereitungseinrichtung (1) nach einem der vorangehenden Ansprüche, **dadurch gekennzeichnet, dass** die Erfassungseinrichtung (6) durch eine Bewegung eines Betätigungsmittels (7; 7a) zur Betätigung der mindestens drei betätigbaren Ventile (2a; 2b; 2c) in der Kopplungseinrichtung (5) betätigt wird.

4. Heißgetränkezubereitungseinrichtung (1) nach einem der vorangehenden Ansprüche, **dadurch gekennzeichnet, dass** die Erfassungseinrichtung (6) eine Betätigung erfasst, sowie ein zeitliches Andauern der Betätigung und/oder Nichtbetätigung.

5. Heißgetränkezubereitungseinrichtung (1) nach einem der vorangehenden Ansprüche, **dadurch gekennzeichnet, dass** das Betätigungsmittels (7; 7a) zur Betätigung der mindestens drei betätigbaren Ventile (2a; 2b; 2c) eine Außenverzahnung (8a), eine Drehachse (9) und Schaltnocken (10a; 10b; 10c) zum Betätigen der Erfassungsvorrichtung (6) aufweist.

6. Heißgetränkezubereitungseinrichtung (1) nach Anspruch 5, **dadurch gekennzeichnet, dass** die Außenverzahnung (8a) des Betätigungsmittels (7; 7a) mit einer Außenverzahnung (8b) eines Kupplungs-/Antriebsmittels (11) zum Antrieb der beweglichen Brühkammer (4) und/oder des beweglichen Teils der Brüheinheit (3) wirkverbunden ist.

7. Heißgetränkezubereitungseinrichtung (1) nach einem der Ansprüche 5 oder 6, **dadurch gekennzeichnet, dass** die Erfassungseinrichtung (6) durch die Schaltnocken (10a; 10b; 10c) des Betätigungsmittels (7; 7a) zur Betätigung der mindestens drei betätigbaren Ventile (2a; 2b; 2c) betätigt wird.

8. Heißgetränkezubereitungseinrichtung (1) nach einem der vorangehenden Ansprüche, **dadurch gekennzeichnet, dass** das die Erfassungseinrichtung (6), das Betätigungsmittels (7; 7a) zur Betätigung der mindestens drein betätigbaren Ventile (2a; 2b; 2c) und das Kupplungs-/Antriebsmittels (11) in und/oder an einem Getriebegehäuse angeordnet sind.

9. Heißgetränkezubereitungseinrichtung (1) nach einem der vorangehenden Ansprüche, **dadurch gekennzeichnet, dass** das Betätigungsmittels (7; 7a) zur Betätigung der mindestens drei betätigbaren Ventile (2a; 2b; 2c) eine mindestens der Anzahl der betätigbaren Ventile (2a; 2b; 2c) entsprechende Anzahl an Schaltnocken (10a; 10b; 10c) aufweist.

10. Heißgetränkezubereitungseinrichtung (1) nach Anspruch 9, **dadurch gekennzeichnet, dass** mindestens ein Schaltnocken (10a) eine von den anderen Schaltnocken (10b; 10c) abweichende Geometrie aufweist, so dass die Erfassungseinrichtung (6) ein von dem der anderen Nocken (10b; 10c) abweichendes zeitliches Andauern der Betätigung und/oder Nichtbetätigung erfasst.

11. Heißgetränkezubereitungseinrichtung (1) nach einem der vorangehenden Ansprüche, **dadurch gekennzeichnet, dass** die Erfassungsvorrichtung (6) einen Mikroschalter (12) aufweist.

## Claims

1. Hot beverage preparation device (1) having a valve arrangement (2) which has at least three actuatable valves (2a; 2b; 2c), a brewing unit (3) with a brewing chamber (4) movable between functional positions (A; B), and a coupling device (5) which couples a movement of the movable brewing chamber (4) and/or a movable part of the brewing unit (3) with an actuation of the at least three actuatable valves (2a; 2b; 2c) of the valve arrangement (2), **characterised in that** a detection device (6) detects the movement of the movable brewing chamber (4) and/or the movable part of the brewing unit (3) and detects an actuation of each of the at least three actuatable valves (2a; 2b; 2c).

2. Hot beverage preparation device (1) according to claim 1, **characterised in that** the detection device (6) is actuated by a movement of a part of the coupling device (5).

3. Hot beverage preparation device (1) according to one of the preceding claims, **characterised in that** the detection device (6) is actuated by a movement of an actuating means (7; 7a) for actuating the at least three actuatable valves (2a; 2b; 2c) in the coupling device (5).

4. Hot beverage preparation device (1) according to one of the preceding claims, **characterised in that** the detection device (6) detects an actuation, as well as a time duration of the actuation and/or non-actuation.

5. Hot beverage preparation device (1) according to one of the preceding claims, **characterised in that** the actuating means (7; 7a) for actuating the at least three actuatable valves (2a; 2b; 2c) has external teeth (8a), an axis of rotation (9) and switching cams (10a; 10b; 10c) for actuating the detection device (6).

6. Hot beverage preparation device (1) according to claim 5, **characterised in that** the external teeth (8a) of the actuating means (7; 7a) are operatively connected to the external teeth (8b) of a coupling/drive means (11) for driving the movable brewing chamber (4) and/or the movable part of the brewing unit (3).

7. Hot beverage preparation device (1) according to one of claims 5 or 6, **characterised in that** the detection device (6) is actuated by the switching cams (10a; 10b; 10c) of the actuating means (7; 7a) for actuating the at least three actuatable valves (2a; 2b; 2c).

8. Hot beverage preparation device (1) according to one of the preceding claims, **characterised in that** the detection device (6), the actuating means (7; 7a) for actuating the at least three actuatable valves (2a; 2b; 2c) and the coupling/drive means (11) are arranged in and/or on a gear housing.

9. Hot beverage preparation device (1) according to one of the preceding claims, **characterised in that** the actuating means (7; 7a) for actuating the at least three actuatable valves (2a; 2b; 2c) has a number of switching cams (10a; 10b; 10c) corresponding at least to the number of the actuatable valves (2a; 2b; 2c).

10. Hot beverage preparation device (1) according to claim 9, **characterised in that** at least one switching cam (10a) has a different geometry from the other switching cams (10b; 10c), such that the detection device (6) detects a time duration of the actuation and/or non-actuation different from that of the other cams (10b; 10c).

11. Hot beverage preparation device (1) according to one of the preceding claims, **characterised in that** the detection device (6) has a microswitch (12).

## Revendications

1. Dispositif de préparation de boissons chaudes (1) comprenant un agencement de vannes (2) qui présente au moins trois vannes (2a ; 2b ; 2c) pouvant être actionnées, comprenant une unité de percolation (3) dotée d'une chambre de percolation (4) déplaçable entre des positions de fonctionnement (A ; B), et comprenant un dispositif de couplage (5) qui couple un mouvement de la chambre de percolation (4) déplaçable et/ou une partie mobile de l'unité de percolation (3) à un actionnement des au moins trois vannes (2a ; 2b ; 2c) pouvant être actionnées de l'agencement de vannes (2), **caractérisé en ce qu'**un dispositif de détection (6) détecte le mouvement de la chambre de percolation (4) déplaçable et/ou de la partie mobile de l'unité de percolation (3) et respectivement un actionnement des au moins trois vannes (2a ; 2b ; 2c) pouvant être actionnées.

2. Dispositif de préparation de boissons chaudes (1) selon la revendication 1, **caractérisé en ce que** le dispositif de détection (6) est actionné par un mouvement d'une partie du dispositif de couplage (5).

3. Dispositif de préparation de boissons chaudes (1) selon l'une quelconque des revendications précédentes, **caractérisé en ce que** le dispositif de détection (6) est actionné par un mouvement d'un moyen d'actionnement (7 ; 7a) dans le but d'actionner les au moins trois vannes (2a ; 2b ; 2c) pouvant être actionnées dans le dispositif de couplage (5).

4. Dispositif de préparation de boissons chaudes (1) selon l'une quelconque des revendications précédentes, **caractérisé en ce que** le dispositif de détection (6) détecte un actionnement ainsi qu'une continuation temporelle de l'actionnement et/ou du non-actionnement.

5. Dispositif de préparation de boissons chaudes (1) selon l'une quelconque des revendications précédentes, **caractérisé en ce que** le moyen d'actionnement (7 ; 7a) destiné à actionner les au moins trois vannes (2a, 2b ; 2c) pouvant être actionnées présente une denture extérieure (8a), un axe de rotation (9) et des cames de contact (10a ; 10b ; 10c) destinées à actionner le dispositif de détection (6).

6. Dispositif de préparation de boissons chaudes (1) selon la revendication 5, **caractérisé en ce que** la denture extérieure (8a) du moyen d'actionnement (7 ; 7a) est en liaison active avec une denture extérieure (8b) d'un moyen d'entraînement/de couplage (11) destiné à entraîner la chambre de percolation (4) déplaçable et/ou la partie mobile de l'unité de percolation (3).

7. Dispositif de préparation de boissons chaudes (1) selon la revendication 5 ou 6, **caractérisé en ce que** le dispositif de détection (6) est actionné par les cames de contact (10a ; 10b ; 10c) du moyen d'actionnement (7 ; 7a) dans le but d'actionner les au moins trois vannes (2a ; 2b ; 2c) pouvant être actionnées.

8. Dispositif de préparation de boissons chaudes (1) selon l'une quelconque des revendications précédentes, **caractérisé en ce que** le dispositif de détection (6), le moyen d'actionnement (7 ; 7a) destiné à actionner les au moins trois vannes (2a ; 2b ; 2c) pouvant être actionnées et le moyen d'entraînement/de couplage (11) sont disposés dans ou sur un boîtier d'engrenage.

9. Dispositif de préparation de boissons chaudes (1) selon l'une quelconque des revendications précédentes, **caractérisé en ce que** le moyen d'actionnement (7 ; 7a) destiné à actionner les au moins trois vannes (2a ; 2b ; 2c) pouvant être actionnées présente un nombre de cames de contact (10a ; 10b ; 10c) correspondant au moins au nombre de vannes (2a ; 2b ; 2c) pouvant être actionnées.

10. Dispositif de préparation de boissons chaudes (1) selon la revendication 9, **caractérisé en ce qu'**au moins une came de contact (10a) présente une géométrie divergeant des autres cames de contact (10b ; 10c) de sorte que le dispositif de détection (6) détecte une continuation temporelle de l'actionnement et/ou du non-actionnement, divergeant de celle des autres cames de contact (10b ; 10c).

11. Dispositif de préparation de boissons chaudes (1) selon l'une quelconque des revendications précédentes, **caractérisé en ce que** le dispositif de détection (6) présente un micro interrupteur (12).
